Europäisches Patentamt

(19) European Patent Office

Office européen des brevets

(11) Publication number: **0 129 520**
**B1**

(12) **EUROPEAN PATENT SPECIFICATION**

(45) Date of publication of patent specification: **03.05.89**

(51) Int. Cl.⁴: **C 05 F 9/02**

(21) Application number: **84830177.6**

(22) Date of filing: **14.06.84**

(54) **A modular element plant for degrading organic wastes by means of earth-worms.**

(30) Priority: **17.06.83 IT 4852683**

(43) Date of publication of application:
**27.12.84 Bulletin 84/52**

(45) Publication of the grant of the patent:
**03.05.89 Bulletin 89/18**

(84) Designated Contracting States:
**AT BE CH DE FR GB IT LI LU NL SE**

(56) References cited:
**US-A-3 654 903**
**US-A-4 108 625**
**US-A-4 513 685**

(73) Proprietor: **CONSIGLIO NAZIONALE DELLE RICERCHE**
**Piazzale Aldo Moro, 7**
**I-00185 Roma (IT)**

(72) Inventor: **Grappelli, Adriana**
**Via Trionfale 6812**
**I-00135 Roma (IT)**
Inventor: **Tomati, Umberto**
**Via Guglielmo Mengarini 88**
**I-00149 Roma (IT)**
Inventor: **Palma, Grazio**
**Via Antonio Vivaldi 9**
**I-00016 Mentana (Roma) (IT)**

(74) Representative: **de Simone, Domenico et al**
**Ing. Barzanò & Zanardo Roma S.p.A. Via Piemonte 26**
**I-00187 Roma (IT)**

Courier Press, Leamington Spa, England.

## Description

The present invention relates to a plant for swallowing organic wastes by degradation by means of earth-worms, said plant being composed of independent modular elements.

The swallowing of the organic wastes is one of the most critical problems which arises in the technologically advanced communities and has been faced in several manners which may be collected into two great categories which are based on the utilization and destruction of the organic wastes. In the last years, particularly in the United States, the interested of some industries and municipalized concerns has been devoted to the possibility to swallow the organic wastes by their transformation by the action of the earth-worms.

The action of the earth-worms reduces in a remarkable degree the volume of the organic wastes and may be considered as a substantial means for reducing the pollution. The earth-worms transform the organic wastes into an excellent odourless fertilizer. Moreover, the production of the earth-worms may be considered as a source of proteins having a high nutrious value for animal feeding.

The swallowing of the organic wastes by the earth-worms is due to that the earth-worms and the microflora of its digesting apparatus degrade any organic material in decomposition and remarkably reduce the volume thereof.

At the same ambient conditions, the degradation rate is a function of the physico-mechanical characteristics of the ambient, which should assure a good aeration, of the ratio C/N, optimal from 15 to 35, and, obviously, of the quantity of the earth-worms. As result a material is obtained which, after being dried up in the air, is odourless and has a granular consistence.

This material, formed by the dejecta of the earth-worms, has the characteristics of a good organic fertilizer. In optimal conditions an earth-worms degrades pro day a quantity of organic substance corresponding to its own weight. It has been demonstrated that the best conditions for increasing the degradation rate are attained when the ratio between the mass of the earth-worms and that of the organic material is 1:10. From the above said it results the possibility to utilize the earth-worms for swallowing solid urban wastes and cleaner muds.

The applicants have carried out several tests in which there have been used mixtures of about 50% aerobic or anaerobic muds, and about 50% of solid urban wastes; the mean value of the composition thereof are indicated in the following table 1.

TABLE 1

Composition of the aerobic muds, anaerobic muds and solid urban wastes (mean values)

|                    | D.M. (%) | C     | O.M.  | Ntot | Ptot | K₂O  |
|--------------------|----------|-------|-------|------|------|------|
| Aerobic mud        | 1.90     | 31.05 | 57.09 | 4.20 | 3.00 | 0.90 |
| Anaerobic mud      | 3.80     | 41.05 | 52.25 | 2.50 | 1.50 | 0.80 |
| Solid urban wastes | 45.50    | 34.35 | 58.12 | 1.77 | 0.75 | 1.02 |

The earth-worms Lumbricus rubellus have been used in a ratio of 40.000 of worms for 1 m³ of organic material. It has been observed that after 100 days all the organic material has been completely digested by the earth-worms.

No negative effects on the earth-worms have been noted in the tests performed on anaerobic muds. A remarkable reduction of the material volume of about 40—60% has been observed. At the end of the tests the earth-worms have been separated and an increase of 300% of their weight has been noted.

The degradation of the organic wastes depends on both the ratio C/N of the material, the optimal ratio ranging from 15 to 35, and oxygen quantity present in the wastes.

The product obtained from the degradation of the organic wastes by means of the earth-worms has the characteristics of a good fertilizer.

The analysis of this fertilizer reveals remarkable quantity of nutritious elements, which are mineralizable and directly assimilable, a relevant microbic content and the presence of biologically active metabolism, particular gibberelins, cytokinins and auxins.

On grounds of the test results it may be affirmed that the use of the earth-worms for the degradation is a very economical manner for degrading any kind of organic materials, particularly urban wastes and cleaner muds.

For carrying out the tests, in really existing conditions, we have built a plant consisting of modulator elements which plant forms the subject-matter of the present invention and has the purpose to solve the problem of the optimal swallowing of the organic wastes by their degradation by means of the earth-worms, said plant being apt to be utilized with optimal economic yield and having a power variable in function of the contingent necessities.

The essential features of the invention are the subject-matter of the present independent Claim 1;

preferred features of the invention are the subject-matter of dependant Claims 2—4.

The plant according to the present invention is built of independent modular elements which may be connected with one another so as to render more functional the use of the entire assembly in a particularly elastic manner so as to adjust its operation to the several conditions as occasion shall require.

The elements include containers assuring the optimal conditions for both the growth of the earth-worms and subsequent swallowing of the organic wastes. Each container may contain about 100.000 earth-worms which assure a daily swallowing of about 50 kg of muds with production of 15—20 kg of humus.

Said elements are joined to one another in a number of 4 superposed elements so as to form modular units which may be joined thereamong in dependence on the desired power of the plant built from said modular units.

The plant in the embodiment which will be disclosed hereafter, consists of 20 units. Since each unit comprises 4 superposed elements, there are formed 4 working stations at different levels as it is shown in the enclosed drawings, in which:

Figure 1 is a top view of the plant showing the arrangement of its units;

Figure 2 is a sectional view along the line II—II of Figure 1;

Figure 3 is a sectional view along the line III—III of Figure 2;

Figure 4 shows a detail of device for discharging the material from belt conveyors into a container, with a hand-operated discharge device;

Figure 5 shows in a sectional view along the line V—V of Figure 1 a detail of a horizontal screw feeder on the respective belt conveyor;

Figure 6 shows some working steps taking place within the containers for obtaining a product as desired according to the invention.

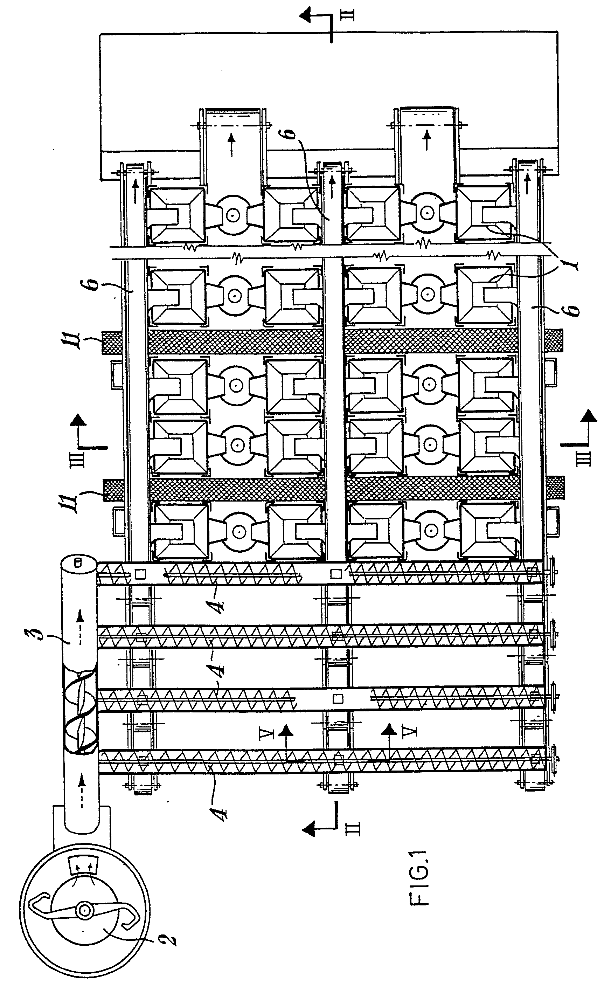

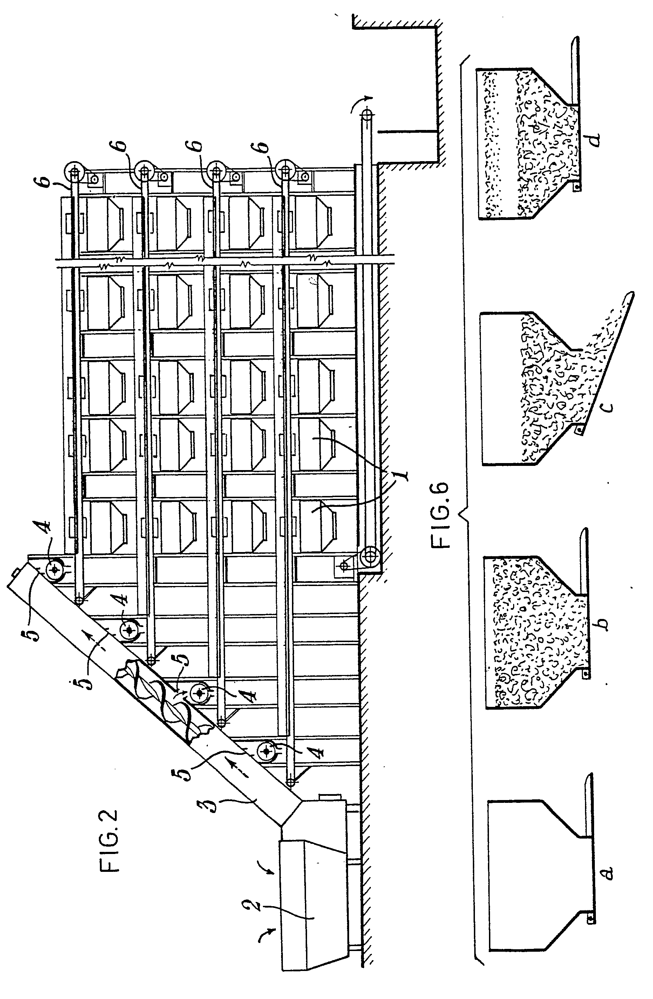

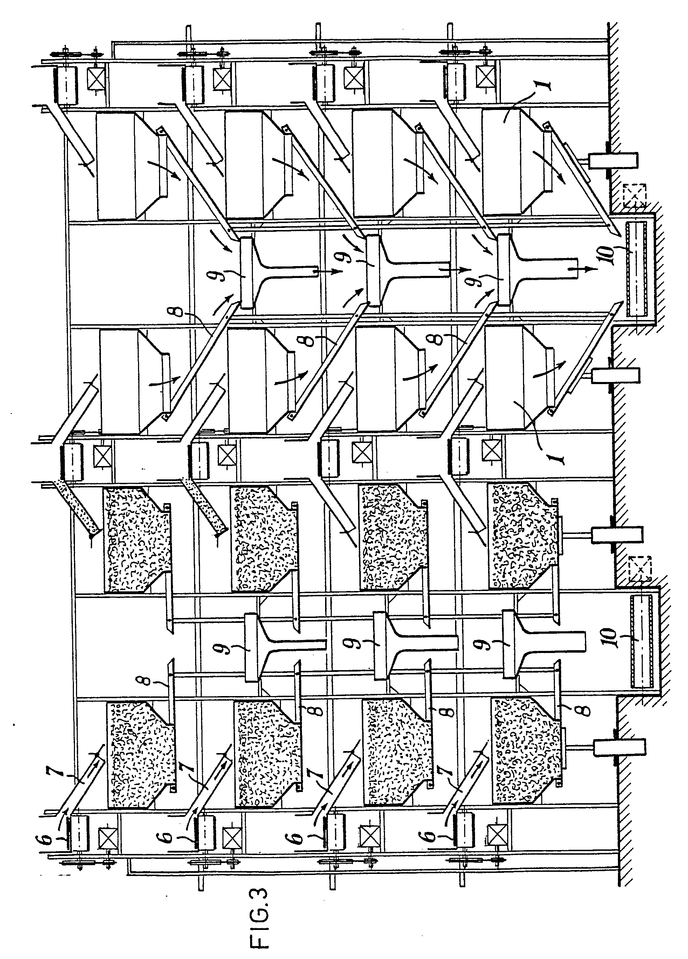

Referring now to Figures 1 to 3, the reference numeral 1 indicates working containers for materials to be swallowed by degradation by means of the earth-worms. The material contained within a tank 2 is conveyed by a sloped main screw feeder 3 and lifted to working stations, at which it is discharged onto horizontal screw feeders 4, one for each station, through output mouths 5.

Said screw feeders 4 convey the material to belt conveyors 6, which are arranged in a number of three for each working station. The material is conveyed by said belt conveyors 6 to containers 1 and discharged thereinto through metering devices 7. An opening assembly 8 is arranged at the bottom of the container 1 and this assembly 8 has also the function to discharge the degraded material into hoppers 9, from which the material falls down onto belt conveyors 10 and is conveyed to storing rooms. Two gangways 11 are arranged on each working station for overseeing the plant elements.

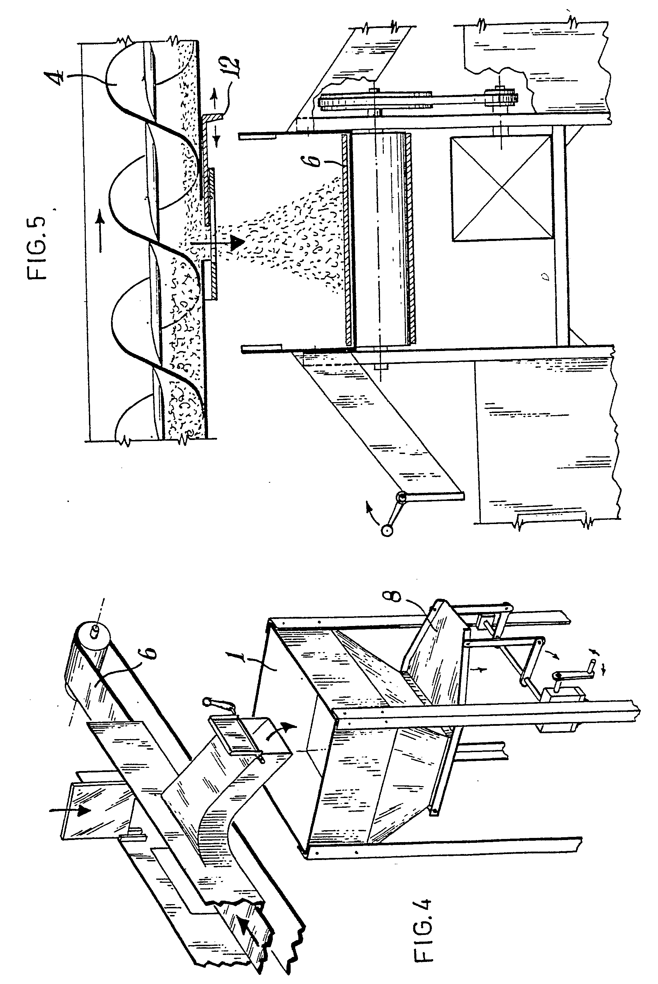

Figure 4 shows a detail of the devices for discharging the material from the belt conveyors 6 into the containers 1 and for discharging said material from said containers.

Figure 5 shows the discharge operation of the material from the screw feeder 4 onto the belt conveyors 6, by means of a hand-operated discharge device 12.

Figure 6 shows some working steps performed in the plant for obtaining the product transformed by the degradation by means of the earth-worms.

Figure 6a shows an empty container. Figure 6b shows a container filled with the material to be degraded to which the earth-worms have been added in the herebefore indicated ratio; Figure 6c shows the step of opening of the container bottom for discharging the degraded material at the end of the biotransformation and Figure 6d shows the subsequent step of closing the container bottom and filling it with a new material. It should be noted that in the step shown in Figure 6c, the degraded material is quickly discharged from the container, whereas the starting material adheres to the container walls.

The present invention has been disclosed with reference to a preferred embodiment, but is understood that several changes and modifications might be made by one skilled in the art, without departing from the general scope of this invention.

## Claims

1. A modular element plant for swallowing organic wastes by degradation by means of earth-worms comprising in combination a tank (2) containing organic wastes to be swallowed, a sloped screw feeder (3) which conveys the wastes from said tank and discharges them onto horizontal screw feeders (4) arranged on working stations placed on different levels, first horizontal belt conveyors (6) on said working stations for conveying said organic wastes to working containers (1) wherein degradation of the waste by means of earth worms occurs, hoppers (9) beneath said containers for discharging biotransformed degraded wastes onto second horizontal conveyors (10) which convey said biotransformed wastes to storing rooms.

2. A plant as claimed in Claim 1, wherein said sloped screw feeder (3) lifting the organic wastes to said working stations is provided with discharge mouths (5) arranged each at the level of the respective working station for discharging the wastes onto said horizontal screw feeder (4) of the corresponding working station.

3. A plant as claimed in Claim 1, wherein said first horizontal belt conveyors (6) discharge said organic wastes into said working containers (1) through metering devices directly connected with said conveyors.

4. A plant as claimed in Claim 3, wherein each working container (1) has its bottom closed by an

opening device (8) for discharging said biotransformed wastes into said hoppers (9) said opening devices being operatively connected with one another.

**Patentansprüche**

1. Aus Moduelementen aufgebaute Anlage zum Schlucken organischer Abfälle, die aus den folgenden Bestandteilen in Kombination besteht:
einem Tank (2), der die zu schluckenden organischen Abfälle enthält, einem geneigten Schneckförderer (3), der die Abfälle vom Tank befördert und sie auf horizontale Schneckendförderer (4) ablädt, die auf in verschiedenen Ebenen angeordneten Arbeitsstationen angeordnet sind, ersten horizontalen Förderbändern (6) auf den Arbeitsstationen zum Befördern der organischen Abfälle zu Arbeitsbehältern (1), wobei der Abbau der Abfälle mittels Erdwürmen stattfindet, und Trichtern (9) unterhalb den Behältern zum Abladen der biologisch umgewandelten, abgebauten Abfälle auf zweite horizontale Förderbänder (10), die die biologisch umgewandelten Abfälle zu Speicherräumen befördern.

2. Anlage nach Anspruch 1, wobei der geneigte Schneckenförderer (3), der die organischen Abfälle zu den Arbeitsstationen anhebt, mit Auslaßöffnungen (5) ausgestattet ist, von jenen jede eine auf der Ebene der betreffenden Arbeitsstation angeordnet ist, um die Abfälle auf die horizontalen Schraubenförderer (4) der entsprechenden Arbeitsstation abzuladen.

3. Anlage nach Anspruch 1, wobei die ersten horizontalen Förderbänder (6) die organischen Abfälle über unmittelbar mit dem Förderband verbundenen Meßvorrichtungen in die Arbeitsbehälter (1) abladen.

4. Anlage nach Anspruch 3, wobei der Boden jedes Arbeisbehälters mittels einer Oeffnungsvorrichtung zum Abladen der biologisch umgewandelten Abfälle in die Trichter verschlossen wird, und wobei die Oeffnungsvorrichtungen im Betrieb miteinander verbunden sind.

**Revendications**

1. Installation à éléments modulaires pour l'élimination de déchets organiques par dégradation au moyen de vers de terre, comprenante en combinaison un réservoir (2) contenant les déchets organiques à éliminer, une vis d'alimentation inclinée (3) qui achemine les déchets du réservoir et les déverse sur des vis d'alimentation horizontales (4) disposées au-dessus de postes de travail installés sur différent niveaux, des premiers convoyeurs horizontaux à bande (6) disposés au-dessus desdits postes de travail pour acheminer les déchets organiques vers des réceptacles de travail (1) ou a lieu la dégradation des déchets au moyen des vers de terre, des trémies (9) disposées sous lesdits réceptacles pour l'évacuation des déchets biotransformés et dégradés sur des deuxièmes convoyeurs horizontaux (10) qui achiminent les déchets biotransformés vers des chambres de stockage.

2. Installation suivant la revendication 1, dans laquelle la vis d'alimentation inclinée (3) qui élève les déchets organiques vers les postes de travail est pourvue d'ouvertures d'évacuation (5) disposées chacune au niveau du poste de travail respectif pour évacuer les déchets sur la vis d'alimentation horizontale (4) précitée du poste de travail correspondant.

3. Installation suivant la revendication 1, dans laquelle les premiers convoyeurs à bande horizontaux (6) déversent les déchets organiques dans les réceptacles de travail (1) précités par l'intermédiaire de dispositifs doseurs directment reliés aux convoyeurs.

4. Installation suivant la revendication 3, dans laquelle chaque réceptacle de travail (1) a son fond obturé par un dispositif d'ouverture (8) pour évacuer les déchets biotransformés dans les trémies (9), lesdits dispositifs d'ouverture étant reliés entre eux de façon opérante.

FIG.1

FIG.2

FIG.6

a   b   c   d

FIG.3

EP 0 129 520 B1

FIG.5

FIG.4